# EUROPEAN PATENT SPECIFICATION

(11) **EP 2 473 722 B1**
(45) Date of publication and mention of the grant of the patent: **30.10.2013**
(21) Application number: 10759712.2
(22) Date of filing: 31.08.2010
(51) Int. Cl.: F01P 11/10, B60K 11/08

(54) **AIR INTRODUCTION STRUCTURE**
LUFTZUFÜHRUNGSSTRUKTUR
STRUCTURE DESTINÉE À L'INTRODUCTION D'AIR

(30) Priority: 02.09.2009 JP 2009202439
(43) Date of publication of application: 11.07.2012
(73) Proprietor: TOYOTA JIDOSHA KABUSHIKI KAISHA, Toyota-shi, Aichi-ken, 471-8571 (JP)
(72) Inventor: AJISAKA, Satoshi, Toyota-shi, Aichi-ken, 471-8571 (JP)
(74) Representative: Winter, Brandl, Fürniss, Hübner, Röss, Kaiser, Polte - Partnerschaft
(86) International application number: PCT/IB2010/002132
(87) International publication number: WO 2011/027203

(56) References cited:
- EP-A1- 1 473 449
- EP-A1- 1 541 452
- EP-A2- 0 254 815
- DE-A1- 3 015 941
- DE-A1-102007 022 298
- JP-A- 5 301 528

## Description

### BACKGROUND OF THE INVENTION

### 1. Field of the Invention

The invention relates to a air introduction structure for guiding the vehicle airflow as air to a to-be-cooled body.

### 2. Description of the Related Art

For example, Japanese Patent Application Publication No. 2007-69651 (JP-A-2007-69651) describes a front vehicle body structure that guides airflow to a radiator disposed in front of an engine, via opening portions of a grill or a bumper cover provided in a front end of the vehicle.
DE 10 2007 022298 A1 shows a vehicular underbody structure for cooling a unit. The underbody structure consists of an inlet opening for underbody airflow. A driven cover flap reduces the airflow in accordance with a cooling requirement and a vehicle speed.
EP 1 473 449 A1 discloses similar to document D1 an apparatus to reduce an airflow for a radiator of a vehicle. In order to do so, several movable flaps are provided to change the opening degree according to the state of the vehicle, such as low temperature or start-up of the vehicle.
EP 0 254 815 A2 shows a cooling air flap and blower control for vehicle. In case the cooling requirement is low, the flaps are controlled by an electric motor to shut an inlet. In case the cooling requirement rises, the flaps are controlled to open the air inlet and in case the requirement still rises a blower is activated in addition so as to increase the cooling capacity.
DE 30 15 641 A1 discloses a similar cooling apparatus for an internal combustion engine of a vehicle comprising a fan which can be moved between two positions.
An air introduction structure according to the preamble of claim 1 is known from JP 5-3010528 A.

In a construction in which an engine or the like is disposed between an opening at the front end of a vehicle and a to-be-cooled body, the airflow through the opening of a bumper cover or the like is blocked by the engine, and therefore does not easily reach the to-be-cooled body. Thus, this construction has room for improvement from the viewpoint of efficiently cooling the to-be-cooled body.

### SUMMARY OF THE INVENTION

The invention provides an air introduction structure that guides air to a to-be-cooled body from under a vehicle in a good manner.

An aspect of the invention relates to an air introduction structure. The air introduction structure includes: a duct portion which is provided in a vehicle body, and which has an opening portion that is open toward a road surface, and which guides airflow generated by the movement of the vehicle to a to-be-cooled body that is disposed at a rear side of the opening portion in a vehicle longitudinal direction; and an inclined wall that is provided at a front side of the opening portion in the vehicle longitudinal direction and at the road surface side of the vehicle body, and that is inclined so that distance to a road surface gradually becomes smaller from a front end side of the vehicle body in the vehicle longitudinal direction toward a front end portion of the opening portion in the vehicle longitudinal direction.

In the above air introduction structure, at least a portion of the airflow that flows between the inclined wall and the road surface is introduced into the duct portion through the opening portion. The introduced airflow is guided as cooling air by the duct portion to the to-be-cooled body, and is used to cool the to-be-cooled body. In the air introduction structure, the airflow under the vehicle body is constricted between the inclined wall and the road surface in such a manner that the degree of the constriction becomes greater toward the opening portion of the duct portion. The Venturi effect due to this constriction gives an upward velocity component (vector) to airflow under the floor, so that airflow is guided as a cooling air to the to-be-cooled body.

Thus, according to the above aspect, airflow may be efficiently directed to the to-be-cooled body from under the vehicle.

In the above aspect, the air introduction structure further includes an airflow guide member that is turned about an axis that lies in a vehicle width direction by wind pressure of the underbody airflow when vehicle speed exceeds a threshold vehicle speed to switch from a retracted position, in which the airflow guide member is positioned in the duct portion, to an airflow guiding position, in which the airflow guide member protrudes from the duct portion toward the road surface through the opening portion.

In this air introduction structure, when the vehicle speed is low, the airflow guide member remains in the retracted position because the wind pressure of the airflow acting on the airflow guide member is small. Because the airflow pressure increases as the vehicle speed increases, relatively large wind pressure acts on the airflow member, so that the airflow guide member switches from the retracted position to the airflow guiding position. Because the airflow guide member in the airflow guiding position is protruded from the duct in a downward direction of the vehicle, the airflow guide member more effectively introduces into the duct portion the driving wind flowing at the road surface side.

In the foregoing construction, the duct portion may communicate with an opening end at a front side of the floor tunnel in the vehicle longitudinal direction, and the to-be-cooled body may be disposed in the floor tunnel, or may be disposed between the floor tunnel and the duct portion.

In this air introduction structure, the driving wind introduced into the duct portion through the opening portion is efficiently guided to the to-be-cooled body that is provided between the duct portion and the floor tunnel, or within the floor tunnel. The cooling air having cooled the to-be-cooled body is discharged through the floor tunnel.

In the foregoing construction, a power unit that serves as a drive source of the vehicle may be disposed at the front side of the floor tunnel in the vehicle longitudinal direction, and the to-be-cooled body may include a heat exchanger for cooling the power unit by circulating a fluid between the heat exchanger and the power unit.

This air introduction structure is able to efficiently introduce driving wind to the heat exchanger through the opening portion that is open toward the road surface side, in a construction equipped with the heat exchanger in the rear of the power unit in the vehicle longitudinal direction. That is, airflow is guided to the to-be-cooled body without being blocked by the power unit (while being guided around the power unit).

In the foregoing construction, the vehicle body may include a lower cover that covers a front portion of the vehicle body in the vehicle longitudinal direction, from a lower side in the vehicle vertical direction, and the duct portion and the inclined wall may be formed integrally with the lower cover.

In this air introduction structure, since the duct portion and the inclined wall are integrally formed with the lower cover, the lower cover restrains relative position change between the duct portion and the inclined wall, thus achieving good efficiency in guiding airflow into the duct portion due to the Venturi effect that is caused between the inclined wall and the road surface.

As described above, the air introduction structure in accordance with the invention has an excellent effect of being able to guide airflow to the to-be-cooled body from under the vehicle in a good manner.

### BRIEF DESCRIPTION OF THE DRAWINGS

The features, advantages, and technical and industrial significance of this invention will be described below with reference to the accompanying drawings, in which like numerals denote like elements, and wherein:
FIG. 1 is a side sectional view of the front portion of a vehicle that incorporates a air introduction structure in accordance with an embodiment of the invention;
FIG 2 is a perspective view of the front portion that includes the air introduction structure in accordance with the embodiment of the invention;
FIG 3 is an enlarged side view of a movable flap that constitutes the air introduction structure in accordance with the embodiment of the invention;
FIG. 4 is a perspective view of a cooling unit that constitutes the air introduction structure in accordance with the embodiment of the invention;
FIG. 5 is a schematic side sectional view for illustrating the introduction of air to a duct portion that is achieved by the air introduction structure in accordance with the embodiment of the invention; and
FIGS. 6A to 6C are schematic side views for illustrating a mechanism of elongation of the wheelbase of a vehicle body to which the air introduction structure in accordance with the embodiment of the invention is applied.

### DETAILED DESCRIPTION OF EMBODIMENTS

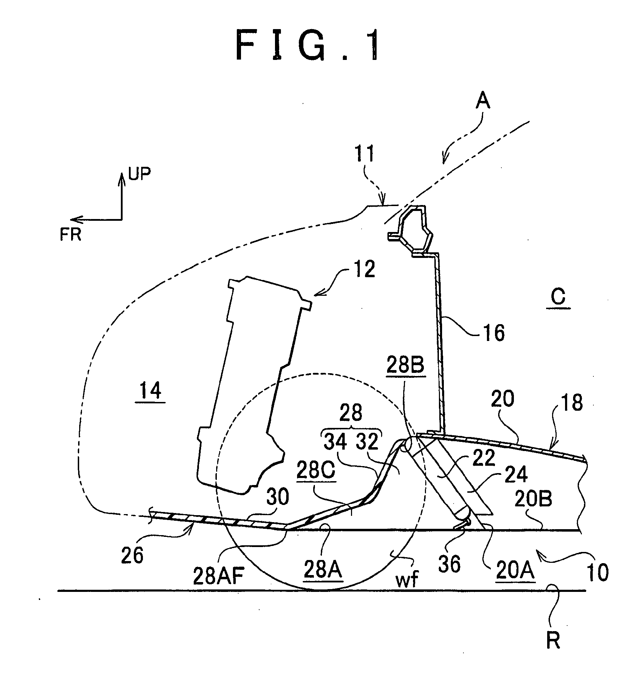

A air introduction structure 10 in accordance with an embodiment of the invention will be described with reference to FIG. 1 to FIG. 5. First, the structure of a vehicle body 11 of a vehicle A, in which the air introduction structure 10 is mounted, will be described. Then, the structure of the air introduction structure 10 will be described. In addition, in the drawings, arrow FR indicates the forward direction of the vehicle, and arrow UP indicates the upward direction of the vehicle, and arrow W indicates the width direction of the vehicle.

FIG 1 shows, in a schematic side sectional view, a front portion of the vehicle A that incorporates the air introduction structure 10. As shown in this drawing, a power unit compartment 14, in which a power unit 12 is disposed, is provided at the front end side of the vehicle A in the longitudinal directions. The power unit 12 in this embodiment includes an engine that is an internal combustion engine, and an electric motor, as drive sources that are, independently of each other, able to drive front wheels Wf. Therefore, the vehicle A is a hybrid vehicle that has two drive sources.

The power unit may include a transversely mounted engine that has a crankshaft aligned in the vehicle width direction, and a transaxle that is connected to the engine to transmit motive power. The transaxle may include the electric motor, a generator (not shown), a power splitting mechanism, etc., as well as a transmission such as a continuously variable transmission or the like. In this embodiment, the transaxle further includes an inverter that is electrically connected to, for example, the electric motor, the generator and a battery. Therefore, the power unit in this embodiment may also be considered as a power plant.

The power unit compartment 14 may be considered as a so-called engine compartment. A rear end portion of the power unit compartment 14 is defined by a dash panel 16 that separates the power unit compartment 14 from the passenger cabin C. The dash panel 16 is joined to a front end portion of a floor panel 18. A central portion of the floor panel 18 in the vehicle width direction is provided with a floor tunnel 20 that extends in the vehicle longitudinal direction and which has a cross-sectional shape of an inverted square "U" in a sectional view taken on a plane orthogonal to the direction in which the floor tunnel 20 extends.

Then, in the vehicle A, a to-be-cooled body, such as the cooling unit 22, is provided so as to close a front-side opening 20A of the floor tunnel 20. Therefore, in this embodiment, the cooling unit 22 is disposed behind the power unit 12 in the vehicle longitudinal direction. The cooling unit 22 includes at least one of a radiator, which serves as a heat exchanger that cools the power unit 12 by circulating coolant between the radiator and the power unit 12 (e.g., the engine and the electric motor thereof), and a condenser, which serves as a heat exchanger that constitutes an air-conditioner device. In addition, the cooling unit 22 may be inclined forward so that the upper end side of the cooling unit 22 is further toward the front of the vehicle than the lower end of the cooling unit 22 is to the front end.

In addition, a fan unit 24 is provided behind the cooling unit 22 in the vehicle longitudinal direction. Due to the operation of the fan unit 24, the air performs heat exchange with coolant as it flows through the cooling unit 22 from the front of the cooling unit 22 and out the rear. After being subject to heat exchange with coolant, the air is discharged out under the floor through a downward-facing opening 20B of the floor tunnel 20. Operation of the fan unit 24 is prohibited when the speed of the vehicle A exceeds a threshold vehicle speed.

The air introduction structure 10 is configured so that the airflow generated by movement of the vehicle A is efficiently guided as a flow of air to the cooling unit 22, which is disposed behind the power unit 12 in the vehicle longitudinal direction. The air introduction structure 10 will be concretely described below.

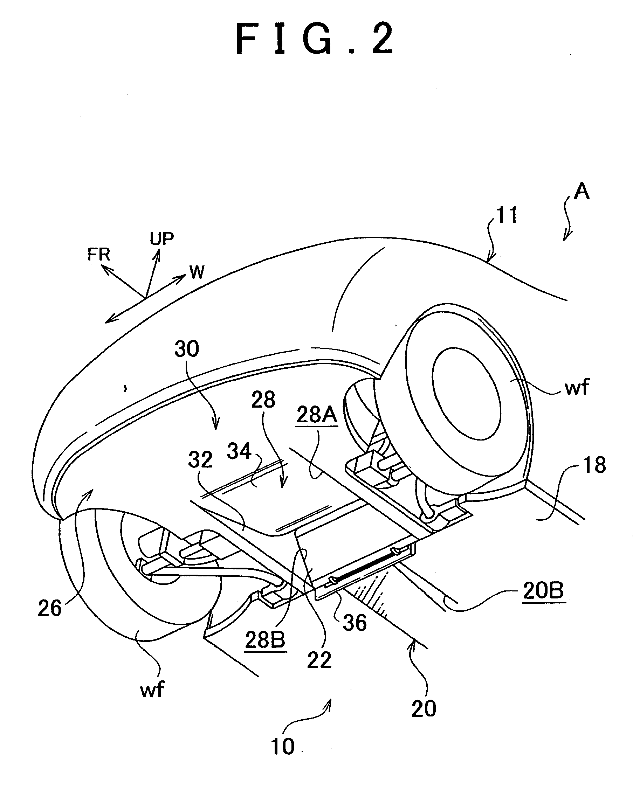

As shown in FIG. 1 and FIG. 2, the air introduction structure 10 includes a lower cover 26 that covers the power unit compartment 14 from a lower side thereof in the vehicle vertical direction. The lower cover 26 includes a duct 28 that guides the airflow flowing between the lower cover 26 and the road surface to the cooling unit 22 (provided in the floor tunnel 20), and a venturi wall 30 that is inclined.

The duct 28, as shown in FIG. 1, has a downward facing inlet opening 28A that is positioned well forward of the floor tunnel 20 in the vehicle longitudinal direction, and a rearward facing outlet opening 28B. that is positioned immediately in front of the floor tunnel 20. The duct 28 is a flow path 28C formed by surrounding a space between the inlet opening 28A and the outlet opening 28B with a pair of left and right side walls 32 that face each other in the vehicle width direction, and an overhead wall 34 that connects upper edges of the two side walls 32.

The cooling unit 22 is sealed and positioned between the front-side opening end 20A of the floor tunnel 20 and the outlet opening 28B of the duct 28. That is, the duct 28 (between the vehicle A and a road surface R) and the floor tunnel 20 are linked together via the cooling unit 22 (an air-side flow path thereof).

The venturi wall 30 is formed by inclining a front side portion of the lower cover 26 that is located forward, in the vehicle longitudinal direction, of a front edge portion 28AF of the inlet opening 28A so that the rear end of the front side portion of the lower cover 26 is closer to the road surface R than a front end side of the front side portion is to the road surface R. It suffices that in the vehicle width direction, the venturi wall 30 be present at least in an area at the front side, in the vehicle longitudinal direction, of the area in which the duct 28 is provided. In this embodiment, however, the front portion of the lower cover 26 extending over substantially the entire width of the vehicle is inclined as the venturi wall 30.

The venturi wall 30 is configured so that the space formed between the venturi wall 30 and the road surface has a venturi shape in which the height of the space decreases (the flow pass cross-sectional area reduces) toward the rear end side of the vehicle. In this embodiment, a portion of the space between the venturi wall 30 and the road surface R that is immediately beneath the front edge portion 28AF is a neck portion that has lowest flow path cross-sectional area is the smallest, where airflow is constricted to the greatest degree.

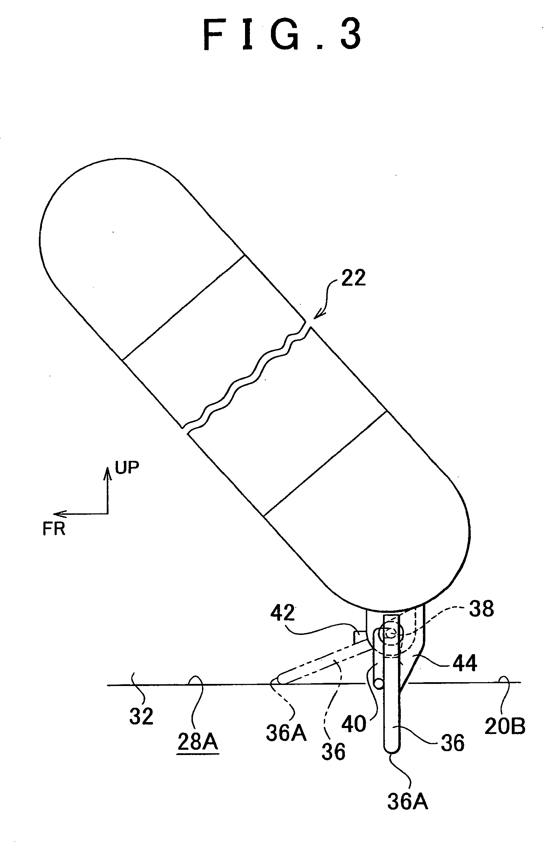

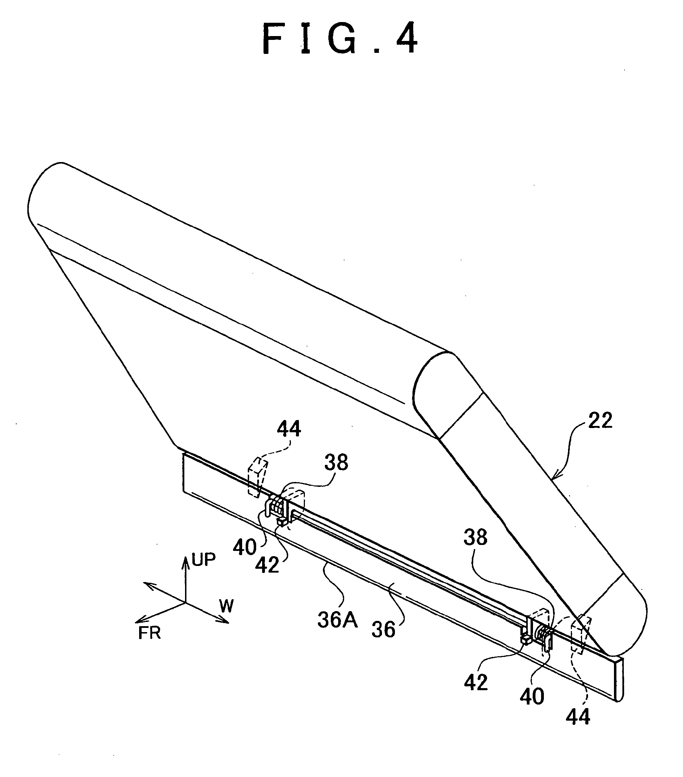

The air introduction structure 10 is equipped with a movable flap 36 as an airflow guide member. As shown in FIG. 3 and FIG. 4, the movable flap 36 is provided below the cooling unit 22, and is constructed so as to be able to assume a retracted position (see an imaginary line in FIG. 3) in which the movable flap 36 is retracted in the duct 28, and an airflow guiding position in which the movable flap 36 protrudes downward toward the road surface R from the inlet opening 28A. The movable flap 36 will be concretely described below.

The movable flap 36 has a generally flat rectangular shape and extends in the vehicle width direction. The side of the movable flap 36 is supported at one end side of the cooling unit 22 in the width direction so as to be rotatable about a support shaft 38 that extends in the vehicle width direction. The movable flap 36 is designed alternate between the retracted position, in which the movable flap 36 contacts a retracted-side stopper 42, and the airflow guiding position in which the movable flap 36 contacts an airflow guiding side stopper 44 as it is turned (displaced in angle) about the support shaft 38, relative to the cooling unit 22. The support shaft 38 is provided at a lower end portion of the cooling unit 22. Therefore, the movable flap 36 in this embodiment is disposed near the rear-side of the inlet opening 28A in the vehicle longitudinal direction.

The movable flap 36 is shifted to the retracted position by a spring 40 provided between the movable flap 36 and the cooling unit 22. Although in the embodiment shown in FIG. 3, the spring 40 is a twisted coil spring, a tension coil spring may also be used as the spring 40.

The spring constant of the spring 40 is set so that the movable flap 36 is placed in the airflow guiding position by the airflow pressure achieved when the speed of the vehicle A (vehicle speed) exceeds a threshold vehicle speed (e.g., 80 km/h). The retracted position of the movable flap 36 is inclined so that the distal side 36A of the movable flap 36 is positioned forward of and below the supported side of the movable flap 36 at which the movable flap 36 is supported on the support shaft 38.

The inclination angle of the retracted position is set at an angle that is substantially along the macroscopic flowing direction of airflow directed into the duct 28A from the inlet opening 28A, or at an angle that is closer to an angle of the airflow guiding position than the angle that is substantially along the macroscopic flowing direction is to the angle of the airflow guiding position (i.e., at an angle such that a surface of the movable flap 36 facing toward the front of the vehicle receives the airflow pressure). In contrast, the airflow guiding position of the movable flap 36 is substantially along the vehicle vertical direction in a side view. The static friction (friction coefficient) between the movable flap 36 and the support shaft 38 or the like is set so that fluttering of the movable flap 36 is maintained at a minimum.

Next, operation of this embodiment will be described.

In the vehicle A equipped with the air introduction structure 10 described above, coolant circulates between the power unit 12 and the cooling unit 22. The coolant is cooled due to the heat exchange that the cooling unit 22 performs with air. Due to this, the power unit 12 is cooled. The cooling unit 22 is fed with air that is subjected to heat exchange with the coolant, due to the turbulence, or the air flow caused by operation of the fan unit 24. The air flow that has been subjected to the heat exchange with the coolant in the cooling unit 22 is then discharged under the floor from the floor tunnel 20 through the opening end 20B.

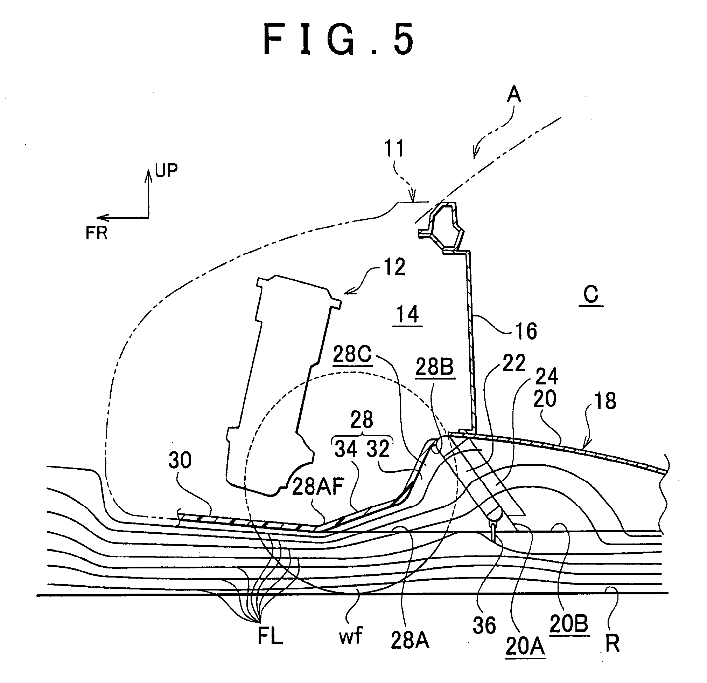

In this air introduction structure 10, because the venturi wall 30 is disposed at the front side of the inlet opening 28A, the turbulence moving to the rear of the vehicle is guided upward relative to the vehicle as shown in FIG 5 by the Venturi effect that occurs before the inlet opening 28A, so that a large amount of air is introduced into the duct 28 through the inlet opening 28A. A plurality of flow lines FL in FIG 5 show the macroscopic directions of flow of air under the vehicle body which are obtained by a numerical analysis. Although not shown in the drawings, in a comparative example in which a lower cover provided before the inlet opening 28A in the longitudinal direction of the vehicle is substantially parallel to the road surface R, the airflow merely flows mainly toward the rear of the vehicle, so that in some cases, the airflow directed toward a cooling unit 22 disposed above the lower cover and the floor panel becomes insufficient.

In the air introduction structure 10 of the embodiment, however, because the venturi wall 30 and the road surface R forms therebetween a Venturi space whose neck portion is located immediately under the front edge portion 28AF, the Venturi effect of the Venturi space increases the amount of air that is introduced into the duct 28 in comparison to the comparative example. In addition, in this air introduction structure 10, when the vehicle A is traveling at relatively low speed, the fan unit 24 is operated to ensure that sufficient air is introduced into the duct 28.

When the speed of the vehicle A exceeds a threshold vehicle speed, the movable flap 36 is shifted to the airflow guiding position. Therefore, the movable flap 36 is protruded from the duct 28 toward the road surface R, so that a portion of the airflow moving toward the rear side of the vehicle is blocked and guided into the duct 28 as shown in FIG. 5. At this time, the operation of the fan unit 24 is prohibited (stopped). Thus, according to the air introduction structure 10, a sufficient amount of air for cooling the power unit 12 operating at high load may be introduced into the duct 28 (into the cooling unit 22) because of the Venturi effect and the movable flap 36, while the increase of the traveling resistance caused by the operation of the fan unit 24 during the high-speed traveling of the vehicle is restrained.

The movable flap 36 is retracted by the force of the spring 40 when the speed of the vehicle A falls below the threshold vehicle speed (or a second threshold vehicle speed that is lower than the threshold vehicle speed). Therefore, according to the air introduction structure 10, when the speed of the vehicle A is in a low-to-intermediate speed range, the movable flap 36 is retracted into the duct 28, thus minimizing the increase in the traveling resistance (deterioration of fuel economy) that would occur if a fixed flap that is always in an airflow guiding position (and therefore has an increased front projected area) were employed. In addition, with a fixed flap it is possible for snow or the like to accumulate on the flap and adversely affecting the cooling performance. In the air introduction structure 10, however, snow or the like is less likely to accumulate on the movable flap 36, because the movable flap 36 is maintained in the retracted posture, thereby avoiding adverse effects due to accumulated snow or the like on the cooling performance of the cooling unit 22.

Thus, in the air introduction structure 10, a sufficient amount of air may be directed to the cooling unit 22 disposed behind of the power unit 12 in the vehicle longitudinal direction, so that the cooling unit 22 is sufficiently cooled.

Therefore, the vehicle A to which the air introduction structure 10 is applied may be configured, for example, so that the power unit 12 is disposed immediately behind a reinforcement of the front bumper, that is, disposed further toward the front of the power unit compartment 14. Specifically, in the air introduction structure 10, the power unit 12 may be disposed closer to the front end of the vehicle in comparison with a comparative example (not shown) in which a radiator and an air conditioner condenser are disposed in a front end portion of the engine compartment.

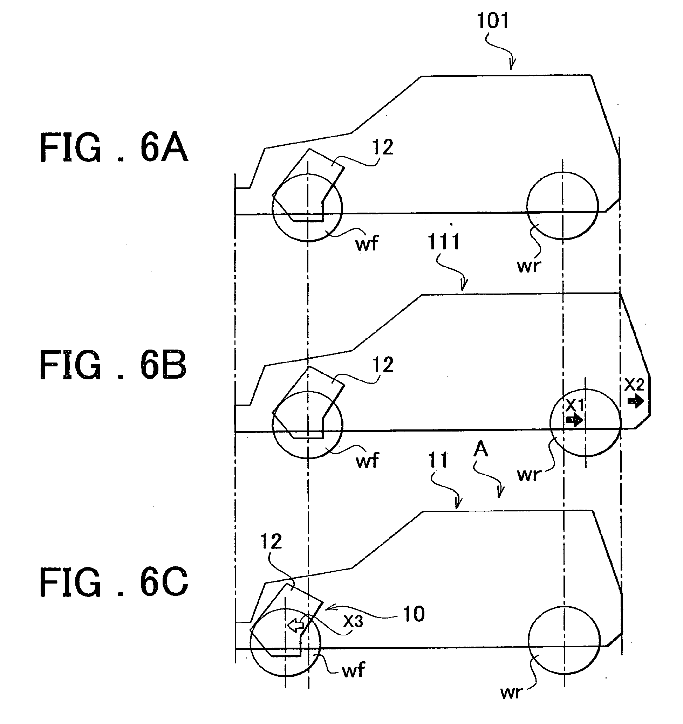

Therefore, in the vehicle A to which the air introduction structure 10 is applied, the wheelbase may be elongated without increasing the size of the vehicle body, by positioning the front wheels Wf further toward the front of the vehicle, together with the power unit 12. This configuration contributes to effective lightening of the entire vehicle A by reducing the weight of the vehicle body. This will be further explained. For example, if the weight of the vehicle body is reduced by changing materials of the body external panels (to a high-tensile steel sheet or a resin sheet) or reducing the weight of interior materials, the relative weight of the power unit 12 increases. Therefore, for example, in a comparative example shown in FIG. 6A, a mere weight reduction of only the vehicle body 101 disrupts the load bearing balance between the front wheels Wf and the rear wheels Wr. Concretely, this will excessively increase the load bearing proportion of the front wheels Wf, making it necessary to elongate the wheelbase. However, if the vehicle body 111 is elongated rearward in the vehicle longitudinal direction (see an arrow X2), as shown in FIG. 6B, in comparison with the vehicle body 101 in order to elongate the wheelbase (see an arrow X1), the vehicle body increases in size, so that the effect of the weight reduction of the vehicle body is reduced.

The air introduction structure 10 may also be configured to increase the wheelbase by positioning the power unit 12 toward the front end of the vehicle, as schematically shown in FIG. 6C. This makes it possible to increase the wheelbase of a vehicle body 11 relative to the wheelbase of the vehicle body 101, without increasing the length of the vehicle body 11. Then, because the wheelbase is lengthened, a good load bearing balance between the front and rear wheels may be attained in the lighter vehicle body 11. Therefore, the air introduction structure 10 lightens the entire vehicle A by reducing the weight of the vehicle body 11, as described above.

Furthermore, in the air introduction structure 10, the front wheels Wf are positioned further toward the front end of the vehicle in comparison with the vehicle body 101 and the vehicle body 111 as described above, so that the front overhang is reduced. This contributes to, for example, improved maneuverability of the vehicle A, improved handling ease thereof, etc. Furthermore, because the power unit 12 is disposed before the power unit compartment 14 in the vehicle longitudinal direction, support members are not needed for supporting the radiator and the air conditioner condenser on vehicle body frame members.

In the air introduction structure 10, the duct 28 and the venturi wall 30 are integrally formed with the lower cover 26. Therefore, in the air introduction structure 10, relative positions of the duct 28 and the venturi wall 30 are fixed, and the wind-guiding efficiency based on the Venturi effect of the venturi wall 30 is good.

In the foregoing embodiment, although the power unit 12 includes an internal combustion engine, and the electric motor, the invention is not restricted to this configuration. For example, the invention may also be configured so that the power unit 12 is either an engine or an electric motor. For example, the power unit 12 may be an engine and an electric motor as a drive source may be disposed at the rear of the vehicle or within the wheels.

In addition, although air is guided to the cooling unit 22 as a to-be-cooled body in the above embodiment, the invention is not restricted to this configuration. For example, the invention may instead be configured so that air is guided via the floor tunnel 20 to a radiator or the like provided for cooling a power unit which stores electric power to be supplied to a vehicle traction motor and which is disposed at a location that is in the rear of a cabin in the vehicle longitudinal direction and that is within the floor tunnel 20.

Furthermore, although the duct 28 and the venturi wall 30 are formed integrally with the lower cover 26 in the above embodiment, the invention is not restricted to this configuration. For example, it is possible to form at least one of the duct 28 and the venturi wall 30 as a separate member, or to adopt a configuration in which the duct 28 and the venturi wall 30 are not provided with a lower cover 26.

Although the movable flap 36 is disposed near the rear edge of the inlet opening 28A in the above embodiment, the invention is not restricted to this configuration. For example, it is also possible to adopt a configuration in which the movable flap 36 is supported by the lower cover 26 to extend across a central portion of the inlet opening 28A in the vehicle longitudinal direction, in an extending direction along the width of the vehicle.

It should be apparent that the invention is not restricted to the described configurations, but may be implemented with various modifications without departing from the scope of the appended claims.

## Claims

1. An air introduction structure (10) comprising:
a duct portion (28) which is provided in a vehicle body, and which has an opening portion (28A) that is open toward a road surface, and which directs underbody airflow to a to-be-cooled body (22) disposed behind the opening portion (28A) in a vehicle longitudinal direction; and
an inclined wall (30) that is provided before the opening portion (28A) in the vehicle longitudinal direction and at the road surface side of the vehicle body, and that is inclined so that distance to a road surface gradually becomes smaller from a front end side of the vehicle body in the vehicle longitudinal direction toward a front end portion of the opening portion (28A) in the vehicle longitudinal direction,
**characterized by** further comprising:
an airflow guide member (36) that is turned about an axis that lies in a vehicle width direction by wind pressure of the underbody airflow when vehicle speed exceeds a threshold vehicle speed to switch from a retracted position, in which the airflow guide member (36) is positioned in the duct portion (28), to an airflow guiding position, in which the airflow guide member (36) protrudes from the duct portion (28) toward the road surface through the opening portion (28A).

2. The air introduction structure (10) according to claim 1, wherein:
the duct portion (28) communicates with an opening end at a front side of the floor tunnel in the vehicle longitudinal direction; and
the to-be-cooled body (22) is disposed in the floor tunnel.

3. The air introduction structure (10) according to claim 1, wherein:
the duct portion (28) communicates with an opening end at a front side of the floor tunnel in the vehicle longitudinal direction; and
the to-be-cooled body (22) is disposed between the floor tunnel and the duct portion.

4. The air introduction structure (10) according to claim 2, wherein:
a power unit (12) that serves as a drive source of the vehicle is disposed forward of the floor tunnel in the vehicle longitudinal direction; and
the to-be-cooled body (22) includes a heat exchanger for cooling the power unit (12), wherein a fluid is circulated between the heat exchanger and the power unit (12) to cool the power unit (12).

5. The air introduction structure (10) according to any one of claims 1 to 3, wherein:
the vehicle body includes a lower cover that covers a lower side of a front portion of the vehicle body; and
the duct portion (28) and the inclined wall (30) are formed integrally with the lower cover.

6. The air introduction structure (10) according to claim 1, further comprising:
a fan unit (24), disposed behind the to-be-cooled body (22), that draws air toward the to-be-cooled body (22), wherein operation of the fan unit (24) is stopped when vehicle speed exceeds a threshold vehicle speed.

## Patentansprüche

1. Luftzuführungsstruktur (10), welche aufweist:
einen Schachtabschnitt (28), der in einer Fahrzeugkarosserie vorgesehen ist und der einen Öffnungsabschnitt (28a) aufweist, der sich zu einer Straßenoberfläche hin öffnet und welcher einen Unterbodenluftstrom zu einem zu kühlenden Körper (22) leitet, welcher sich in einer Fahrzeuglängsrichtung hinter dem Öffnungsabschnitt (28a) befindet; und
eine angestellte Wandung (30), die in der Fahrzeuglängsrichtung vor dem Öffnungsabschnitt (28a) und auf der Straßenoberflächenseite der Fahrzeugkarosserie vorgesehen ist und die so angestellt ist, dass ein Abstand zu einer Straßenoberfläche von einer in Fahrzeuglängsrichtung vorderen Endseite der Fahrzeugkarosserie zu einem in der Fahrzeuglängsrichtung vorderen Endabschnitt des Öffnungsabschnitts (28a) allmählich kleiner wird,
ferner **gekennzeichnet durch**:
ein Luftstromleitelement (36), das **durch** Winddruck des Unterbodenluftstroms um eine in einer Fahrzeugquerrichtung liegende Achse gedreht wird, wenn eine Fahrzeuggeschwindigkeit einen Fahrzeuggeschwindigkeitsschwellwert übersteigt, um von einer zurückgezogenen Position, bei der sich das Luftstromleitelement (36) in dem Schachtabschnitt (38) positioniert ist, in eine Luftstromleitposition umzuschalten, bei der das Luftstromleitelement (36) von dem Schachtabschnitt (38) **durch** den Öffnungsabschnitt (28a) zur Straßenoberfläche vorspringt.

2. Luftzuführungsstruktur (10) nach Anspruch 1, wobei:
der Schachtabschnitt (28) mit einem Öffnungsende an einer in der Fahrzeuglängsrichtung vorderen Seite des Bodentunnels verbunden ist; und
der zu kühlende Körper (22) in dem Bodentunnel angeordnet ist.

3. Luftzuführungsstruktur (10) nach Anspruch 1, wobei:
der Schachtabschnitt (28) mit einem Öffnungsende an einer Vorderseite des Bodentunnels in der Fahrzeuglängsrichtung verbunden ist; und
der zu kühlende Körper (22) zwischen dem Bodentunnel und dem Schachtabschnitt angeordnet ist.

4. Luftzuführungsstruktur (10) nach Anspruch 2, wobei:
eine als eine Antriebsquelle des Fahrzeugs dienende Leistungseinheit (12) in der Fahrzeuglängsrichtung vor dem Bodentunnel angeordnet ist; und
der zu kühlende Körper (22) einen Wärmetauscher zum Kühlen der Leistungseinheit (12) beinhaltet, wobei zum Kühlen der Leistungseinheit (12) zwischen dem Wärmetauscher und der Leistungseinheit (12) ein Fluid zirkuliert.

5. Luftzuführungsstruktur (10) nach einem der Ansprüche 1 bis 3, wobei
die Fahrzeugkarosserie eine untere Abdeckung beinhaltet, welche eine untere Seite eines vorderen Abschnitts der Fahrzeugkarosserie abdeckt; und
der Schachtabschnitt (28) und die angestellte Wandung (30) einstückig mit der unteren Abdeckung ausgebildet sind.

6. Luftzuführungsstruktur (10) nach Anspruch 1, welche ferner aufweist:
eine Ventilatoreinheit (24), welche hinter dem zu kühlenden Körper (22) angeordnet ist und Luft zu dem zu kühlenden Körper (22) ansaugt, wobei ein Betrieb der Ventilatoreinheit (24) gestoppt wird, wenn die Fahrzeuggeschwindigkeit einen Fahrzeuggeschwindigkeitsschwellwert übersteigt.

## Revendications

1. Structure d'introduction d'air (10), comprenant :
une partie de conduit (28) qui est prévue dans une carrosserie de véhicule, et qui présente une partie d'ouverture (28A) qui est ouverte vers une surface de route, et qui dirige un écoulement d'air de soubassement de carrosserie vers un corps devant être refroidi (22) disposé derrière la partie d'ouverture (28A) dans une direction longitudinale du véhicule ; et
une paroi inclinée (30) qui est prévue avant la partie d'ouverture (28A) dans la direction longitudinale du véhicule et au niveau du côté de surface de route de la carrosserie de véhicule, et qui est inclinée de manière à ce qu'une distance la séparant d'une surface de route diminue progressivement depuis un côté d'extrémité avant de la carrosserie de véhicule dans la direction longitudinale du véhicule vers une partie d'extrémité avant de la partie d'ouverture (28A) dans la direction longitudinale du véhicule,
**caractérisée en ce qu'**elle comprend en outre :
un élément de guidage d'écoulement d'air (36) qui est amené à tourner autour d'un axe qui s'étend dans une direction de largeur du véhicule par une pression du vent de l'écoulement d'air de soubassement de carrosserie lorsqu'une vitesse de véhicule dépasse une vitesse seuil de véhicule pour passer d'une position rétractée, dans laquelle l'élément de guidage d'écoulement d'air (36) est positionné dans la partie de conduit (28), à une position de guidage d'écoulement d'air, dans laquelle l'élément de guidage d'écoulement d'air (36) fait saillie depuis la partie de conduit (28) en direction de la surface de route à travers la partie d'ouverture (28A).

2. Structure d'introduction d'air (10) selon la revendication 1, dans laquelle :
la partie de conduit (28) communique avec une extrémité d'ouverture au niveau d'un côté avant du tunnel de plancher dans la direction longitudinale du véhicule ; et
le corps devant être refroidi (22) est disposé dans le tunnel de plancher.

3. Structure d'introduction d'air (10) selon la revendication 1, dans laquelle :
la partie de conduit (28) communique avec une extrémité d'ouverture au niveau d'un côté avant du tunnel de plancher dans la direction longitudinale du véhicule ; et
le corps devant être refroidi (22) est disposé entre le tunnel de plancher et la partie de conduit.

4. Structure d'introduction d'air (10) selon la revendication 2, dans laquelle :
une unité de puissance (12) qui sert de source d'entraînement du véhicule est disposée en avant du tunnel de plancher dans la direction longitudinale du véhicule ; et
le corps devant être refroidi (22) comporte un échangeur de chaleur pour le refroidissement de l'unité de puissance (12), dans lequel un fluide est mis en circulation entre l'échangeur de chaleur et l'unité de puissance (12) pour refroidir l'unité de puissance (12).

5. Structure d'introduction d'air (10) selon l'une quelconque des revendications 1 à 3, dans laquelle :
la carrosserie de véhicule comporte un couvercle inférieur qui recouvre un côté inférieur d'une partie avant de la carrosserie de véhicule ; et
la partie de conduit (28) et la paroi inclinée (30) sont formées d'un seul tenant avec le couvercle inférieur.

6. Structure d'introduction d'air (10) selon la revendication 1, comprenant en outre :
une unité de ventilation (24), disposée derrière le corps devant être refroidi (22), qui aspire l'air vers le corps devant être refroidi (22), dans laquelle le fonctionnement de l'unité de ventilation (24) est interrompu lorsqu'une vitesse de véhicule dépasse une vitesse seuil de véhicule.
